# EUROPEAN PATENT SPECIFICATION

(11) **EP 2 779 337 B1**
(45) Date of publication and mention of the grant of the patent: **28.06.2017**
(21) Application number: 12847383.2
(22) Date of filing: 06.11.2012
(51) Int. Cl.: H02G 3/16, B60R 16/02, B60R 16/023, H02B 1/28

(54) **ELECTRICAL JUNCTION BOX**
ELEKTRISCHE ANSCHLUSSDOSE
BOÎTE DE RACCORDEMENT ÉLECTRIQUE

(30) Priority: 07.11.2011 JP 2011243857
(43) Date of publication of application: 17.09.2014
(73) Proprietor: AutoNetworks Technologies, Ltd., Yokkaichi-shi, Mie 510-8503 (JP); Sumitomo Wiring Systems, Ltd., Yokkaichi-shi, Mie 510-8503 (JP); Sumitomo Electric Industries, Ltd., Osaka-shi, Osaka 541-0041 (JP)
(72) Inventor: HASHIKURA, Manabu, Yokkaichi-shi, Mie 510-8503 (JP); TSUCHIDA, Toshiyuki, Yokkaichi-shi, Mie 510-8503 (JP); OKUMI, Shinsuke, Yokkaichi-shi, Mie 510-8503 (JP)
(74) Representative: Winter, Brandl, Fürniss, Hübner, Röss, Kaiser, Polte - Partnerschaft mbB
(86) International application number: PCT/JP2012/078672
(87) International publication number: WO 2013/069616

(56) References cited:
- EP-A2- 0 760 313
- WO-A1-93/26141
- JP-A- 2000 253 539
- JP-A- 2007 312 539
- JP-A- 2009 027 869
- US-A- 5 023 752
- US-A- 6 126 457
- US-A1- 2003 231 482

## Description

### TECHNICAL FIELD

The present invention relates to an electrical junction box.

Conventionally, an electrical junction box that is configured to control distribution of a current that is supplied from a power source to various vehicle electrical components is employed in a vehicle. The electrical junction box houses various electrical components such as a relay and a fuse in a casing thereof. JP 2010-108661 A discloses a known relay that is used in the electrical junction box having the above-described configuration.

From US 2003/231482 A1 an electric connection box is known, comprising a housing for accomodating a plurality of relays. Moreover, US 5,023,752 A discloses an electrical power distribution center the present invention starts from. Also this distribution center comprises a housing for accomodating a plurality of relays, which are arranged in a deliberate manner.

### SUMMARY OF INVENTION

The relay described in JP 2010-108661 A includes an electrical component case, a terminal housed in the electrical component case, a coil connected to the terminal, and a metal plate that is exposed to an inside and an outside of the electrical component case, in addition to the terminal. In this configuration, moisture in the electrical component case can be actively condensed on the metal plate by heat generated by the coil in the electrical component case when an environmental temperature decreases. Accordingly, condensation on a contact of the terminal is less likely to occur, and thus poor conduction at the contact, which may be caused by the frozen condensation, hardly occurs.

However, the technology described in JP 2010-108661 A is made to prevent the poor conduction, which may be caused by the freezing, at the contact of the relay itself. The technology in JP 2010-108661 A does not take influence of other electrical components housed in the electrical junction box than the relay into consideration. Since the electrical junction box houses other various electrical components than the relay, influence of heat generated on such other electrical components, or influence of varied timing of supply/non-supply of the current depending on the kinds of electrical component, may cause the relay to easily have the problem of the poor conduction, which is caused by the freezing, at the contact.

The present invention was accomplished in view of the foregoing circumstances. An object of the present invention is to prevent a malfunction of an electrical component housed in an electrical junction box.

The present invention relates to an electrical junction box that includes a casing and an electrical component housed in the casing. The electrical component is located at an outer end in the casing. The electrical component includes an electrical component case and a terminal. The terminal is attached through the electrical component case and includes a contact located inside the electrical component case. Furthermore, means are provided for decreasing a temperature of the electrical component case under operation of the electrical component housed therein, said means are provided by the casing including an inner wall and an outer wall located more exterior than the inner wall in a thickness direction of the inner wall, and one of the inner wall and the outer wall has a cutout at a position near the electrical component

According to the present invention, the decrease in the temperature of the electrical component case can be facilitated in a low temperature environment by arranging the electrical component at the outer end, where the heat can be easily released to the outside. Accordingly, the condensation and the freezing of the moisture in the electrical component case are less likely to occur on the contact. Thus, a malfunction of the electrical component is less likely to occur.

According to the present invention, the above effect is significantly improved when one of the inner wall and the outer wall has the cutout. In this configuration, at a part having the cutout, the inside and the outside of the casing are separated by only one of the inner wall and the outer wall. Accordingly, the heat can be easily released from the electrical component case to the outside of the casing compared to a double-layered structure including the inner wall and the outer wall. Accordingly, the temperature of the electrical component case can be decreased. The difference in the temperature between the electrical component case and the terminal having the contact to be in contact with the electrical component case can be made smaller, and thus the condensation and the freezing of the moisture in the electrical component case hardly occur on the contact.

The following configurations are preferable as embodiments of the present invention. Preferably, the casing includes a corner defined by a plurality of walls and the electrical component is located at the corner in the casing.

In the above configuration, the corner of the casing is defined by the walls, and thus the heat in the casing can be easily diffused to the outside through the walls. The temperature of the electrical component case can be decreased by arranging the electrical component at this corner. Accordingly, the condensation and the freezing of the moisture in the electrical component case are further less likely to occur.

Preferably, the casing includes a ventilation hole at a position near the electrical component, and an inside and an outside of the casing are communicated through the ventilation hole.

In the above configuration, the heat can be released to the outside through the ventilation hole in the casing, and thus the temperature of the electrical component case can be decreased. Accordingly, the condensation and the freezing of the moisture in the electrical component case is further less likely to occur.

Preferably, the electrical component is mounted on a first circuit board housed in the casing, the casing further houses a second circuit board at a position away from a plate surface of the first circuit board, on a side where the electrical component is mounted on the first circuit board, and the second circuit board includes a retraced part at a position corresponding to at least the electrical component. The retracted part is away from a part of the electrical component.

In the above-described configuration, the casing houses the first circuit board and the second circuit board, and thus the electrical junction box can have high-density wiring.

Further, since the second circuit board is disposed on the side where the electrical component is mounted on the plate surface of the first circuit board, the heat may be accumulated in the area between the first circuit board and the second circuit board at a position near the electrical component.

In the above-described embodiment, the second circuit board includes the retracted part at a position corresponding to the electrical component. With this configuration, the heat can be released through the retracted part, and thus the heat is less likely to be accumulated in the area between the first circuit board and the second circuit board at the position near the electrical component. As a result, the temperature in the electrical component case can be decreased, and thus the condensation and the freezing of the moisture in the electrical component case is further less likely to occur.

The electrical component is a relay, and the contact of the terminal may at least include a fixed contact and a movable contact movable toward or away from the fixed contact.

According to the above-described configuration, the condensation and the freezing of the moisture in the electrical component case hardly occur on one or both of the fixed contact and the movable contact that are included in the terminal. With this configuration, the movable contact properly comes in contact with the fixed contact, and thus the relay can properly exhibit its switching function.

According to the present invention, a malfunction hardly occurs in the electrical component housed in the electrical junction box.

### BRIEF DESCRIPTION OF THE DRAWINGS

Fig. 1 is a top view of an electrical junction box according to a first embodiment of the present invention.
FIG. 2 is a cross-sectional view taken along a line II-II in FIG. 1.
FIG. 3 is a perspective view of a first casing member.
FIG. 4 is a perspective view of a second casing member.
FIG. 5 is a side view of the electrical junction box.
FIG. 6 is a perspective view of the second casing member.
FIG. 7 is a cross-sectional view taken along a line VII-VII in FIG. 1.
FIG. 8 is a cross-sectional view taken along a line VIII-VIII in FIG. 5. 5.
FIG. 9 is a side cross-sectional view illustrating a schematic configuration of a relay included in the electrical junction box.
FIG. 10 is a side view of the second casing member.
FIG. 11 is a top view of an electrical junction box according to a second embodiment of the present invention.

### MODES FOR CARRYING OUT THE INVENTION

### <First embodiment>

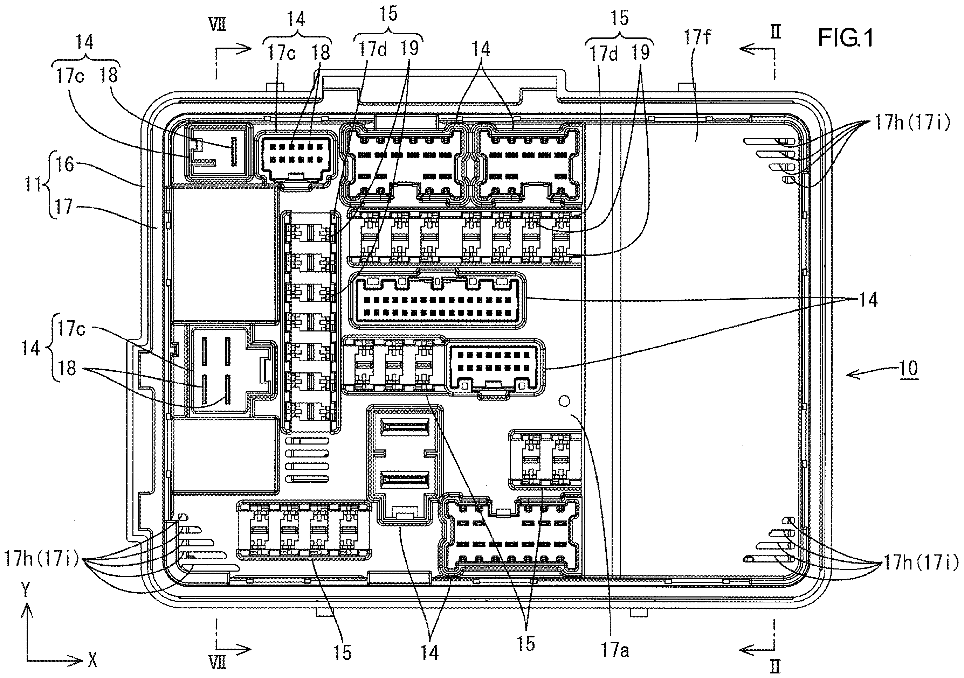

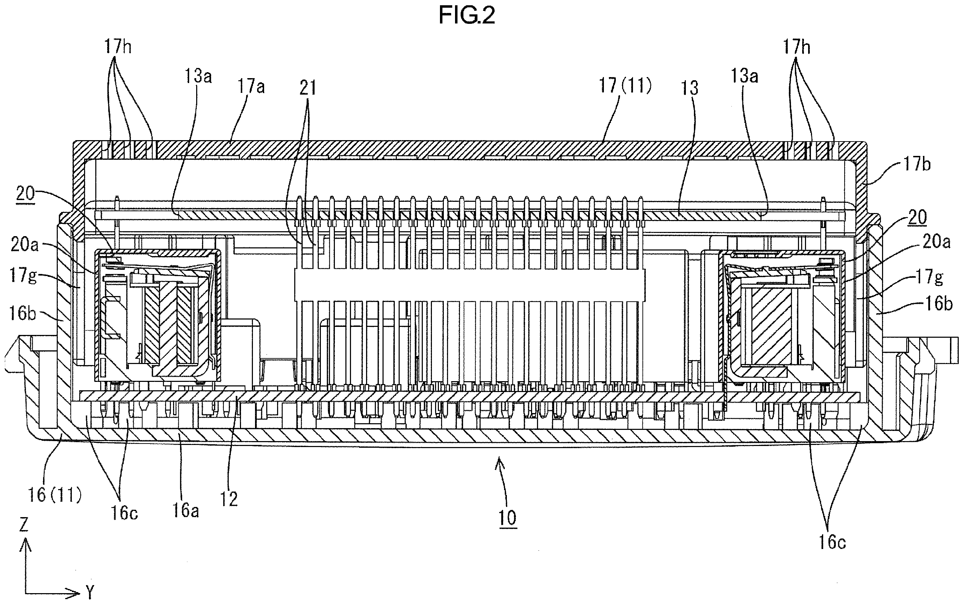

A first embodiment of the present invention will be described with reference to FIG. 1 to FIG. 10. An electrical junction box 10 according to this embodiment is configured to be installed in a vehicle which is not illustrated. The electrical junction box 10 is connected between a battery, which is not illustrated, and various vehicle electrical components, which are not illustrated, and is configured to control whether or not to supply a current to the vehicle electrical component. The electrical junction box 10 is attached at any position as required, for example, in an engine room of the vehicle or a vehicle compartment. Examples of the vehicle electrical component include various lamps (such as a headlamp, a brake lamp, a hazard lamp (a winker lamp), and a vehicle compartment lamp), an air-conditioner, a power window, a power steering, a power seat, a horn, a wiper, a defroster, a seat heater, a starter, an engine control unit, a fuel pump, and an ignition. An X-axis, a Y-axis, and a Z-axis are described in a part of the drawings. The axes in each drawing correspond to the respective axes in other drawings. An upper side in FIG. 2 corresponds to a front side. A lower side in FIG. 2 corresponds to a rear side.

### (Casing 11)

As illustrated in FIG. 1, the electrical junction box 10 has a horizontally elongated rectangular shape as a whole. The electrical junction box 10 includes a casing 11, a first circuit board 12 that is housed in the casing 11, and a second circuit board 13 that is housed in the casing 11 and overlaps with the first circuit board 12 with a distance therebetween (see FIG. 2). As illustrated in FIG. 1, the electrical junction box 10 includes connectors (operational electrical components) 14 to each of which a counter connector (not illustrated) that is provided at an end portion of an electric wire (a wire harness), which is electrically connected to the battery or the vehicle electric component, is connected. The electrical junction box 10 further includes fuse connectors (operational electrical components) 15 each of which is configured to receive and to be connected to a fuse which is not illustrated. The counter connectors and the fuses are configured to be inserted in the electrical junction box 10 from the front side in the Z-axis direction. A long-side direction, a short-side direction, and a thickness direction of the electrical junction box 10 correspond to the X-axis direction, the Y-axis direction, and the Z-axis direction, respectively, in each drawing.

The casing 11 is made of synthetic resin. As illustrated in FIG. 1, the casing 11 has the same horizontally elongated rectangular shape as the electrical junction box 10. The casing 11 includes assembled two casing members 16, 17 on the front side and the rear side (in a vertical direction in FIG. 2). One of the casing members 16, 17 that is disposed on the rear side (a lower side in FIG. 2) is a first casing member (a lower case) 16 and the other one of them that is disposed on the front side (an upper side in FIG. 2) is a second casing member (an upper case) 17. The first casing member 16 and the second casing member 17 that are assembled have an internal space having a predetermined size. The first circuit board 12 and the second circuit board 13 can be housed in the space. An assembling direction of the casing members 16, 17 corresponds to the Z-axis direction.

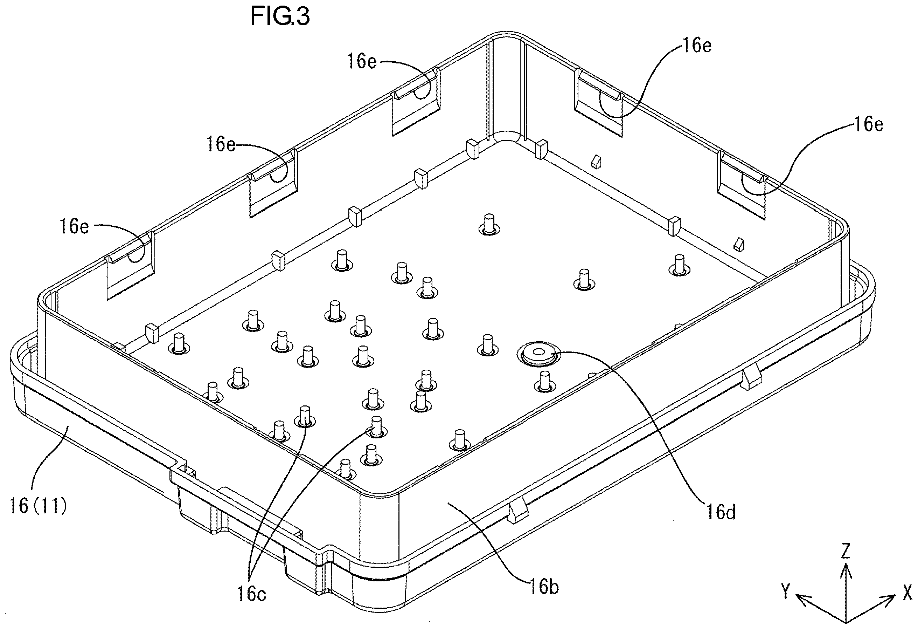

As illustrated in FIG. 2, the first casing member 16 has a box-like shape that opens toward the front side in the Z-axis direction (toward the upper side in FIG. 2). As illustrated in FIG. 3, the first casing member 16 includes a bottom wall 16a that extends in the X-axis direction and the Y-axis direction (along a plate surface of the first circuit board 12) and an outer wall 16b that extends upward from an outer edge of the bottom wall 16a in the Z-axis direction and has a substantially rectangular tubular shape. Multiple Support projections 16c that are configured to support the first circuit board 12 from the rear side are dispersedly disposed on a surface of the bottom wall 16a of the first casing member 16. The bottom wall 16a includes a screw receiving part 16d to which a screw is fastened to fix the second casing member 17. As illustrated in FIG. 3, locking portions 16e are disposed on an inner surface of the outer wall 16b to maintain the assembled state of the casing members 16, 17. Each locking portion 16e is a tab-like protrusion at a front edge of the outer wall 16b. The locking portions 16e are disposed on each of long sides and short sides of the outer wall 16b.

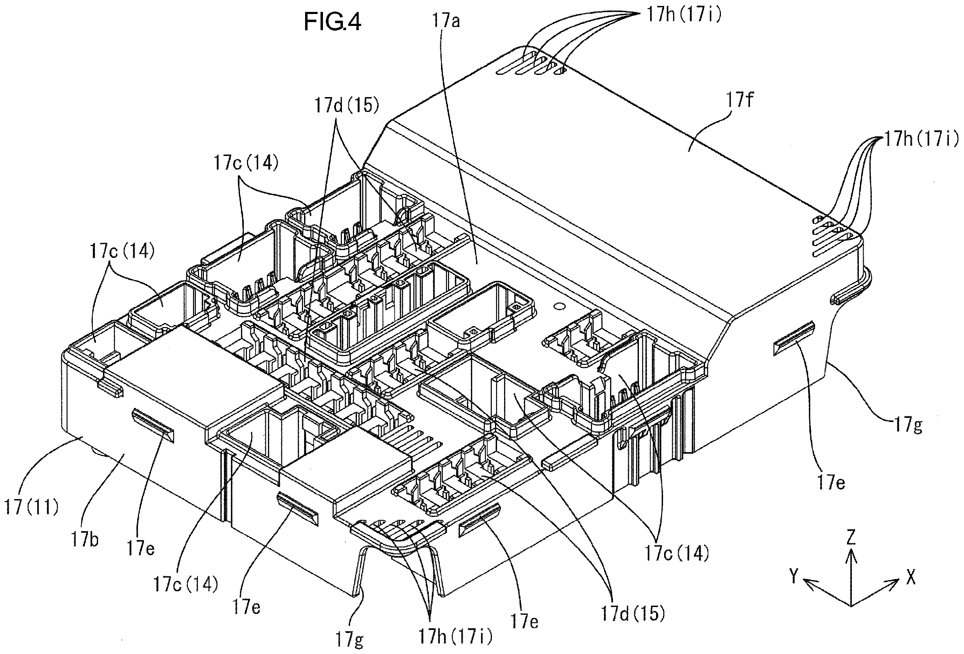

As illustrated in FIG. 4, the second casing member 17 has a box-like shape that opens toward the rear side in the Z-axis direction (toward the lower side in FIG. 4). The second casing member 17 generally includes an upper wall 17a and an inner wall 17b. The upper wall 17a faces the bottom wall 16a of the first casing member 16 and covers the first circuit board 12 and the second circuit board 13 from the front side. The inner wall 17b extends from an outer edge of the upper wall 17a toward the rear side and has a substantially rectangular tubular shape. The upper wall 17a includes connector hoods 17c and fuse attachments 17d. The connector hoods 17c each constitute the connector 14 together with a connector terminal 18, which is mounted on the first circuit board 12 and will be described later. The fuse attachments 17d each constitute the fuse connector 15 together with a fuse connecting terminal 19 mounted on the first circuit board 12. Almost all of the connector hoods 17c and the fuse attachments 17d (specifically, except for the connector hood 17c that is disposed at an upper left corner in FIG. 1) are concentrated at a middle of the upper wall 17a in the long-side direction thereof. Each connector hood 17c surrounds multiple connector terminals 18 collectively and has a substantially rectangular tubular shape that opens toward the front side such that the counter connector can be fitted thereto from the front side. Each fuse attachment 17d surrounds the fuse connecting terminals 19 individually and has a substantially rectangular tubular shape that opens toward the front side and has fuse attachment spaces to which the above-described fuses can be individually fitted from the front side. The upper wall 17a includes a protruded section 17f at one end in the long-side direction thereof (an upper right end in FIG. 4). The protruded section 17f is located slightly above the connector hoods 17c and the fuse attachments 17d. The protruded section 17f houses the second circuit board 13 therein (see FIG. 2).

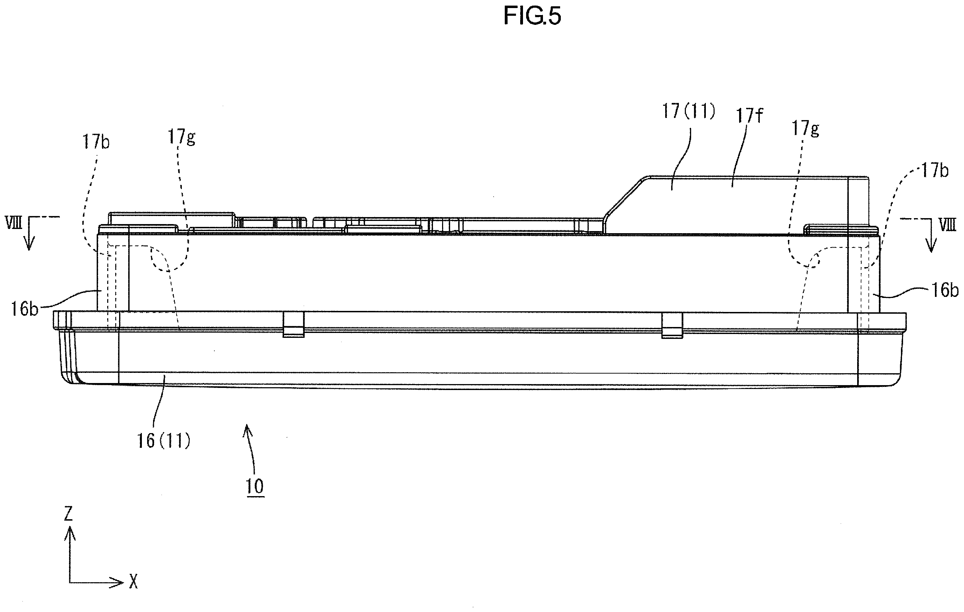

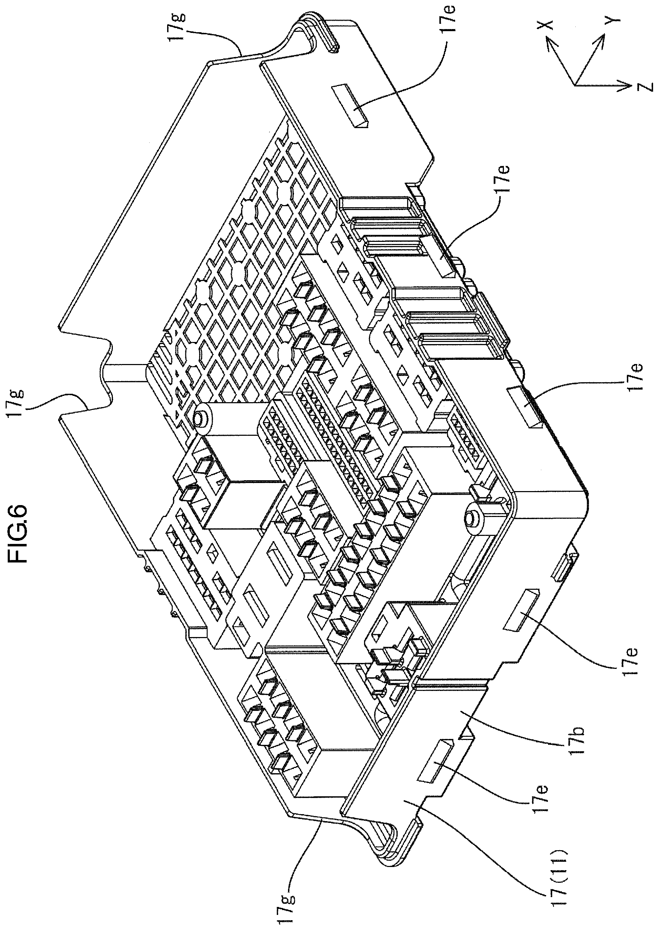

As illustrated in FIG. 5, the inner wall 17b is configured to be fitted to an inner surface of the outer wall 16b of the first casing member 16. In other words, the outer wall 16b is disposed more exterior than the inner wall 17b in the thickness direction of the inner wall 17b. The inner wall 17b and the outer wall 16b provide the casing 11 with a double-layered structure. As illustrated in FIG. 4 and FIG. 6, the inner wall 17b has locking protrusions 17e at its outer surface. The locking protrusions 17e and the locking portions 16e of the outer wall 16b are locked together to maintain the assembled state of the casing members 16, 17. The locking protrusions 17e each protrude from the outer surface of the inner wall 17b. Multiple locking protrusions 17e are disposed on long sides and short sides of the inner wall 17b.

### (First circuit board 12)

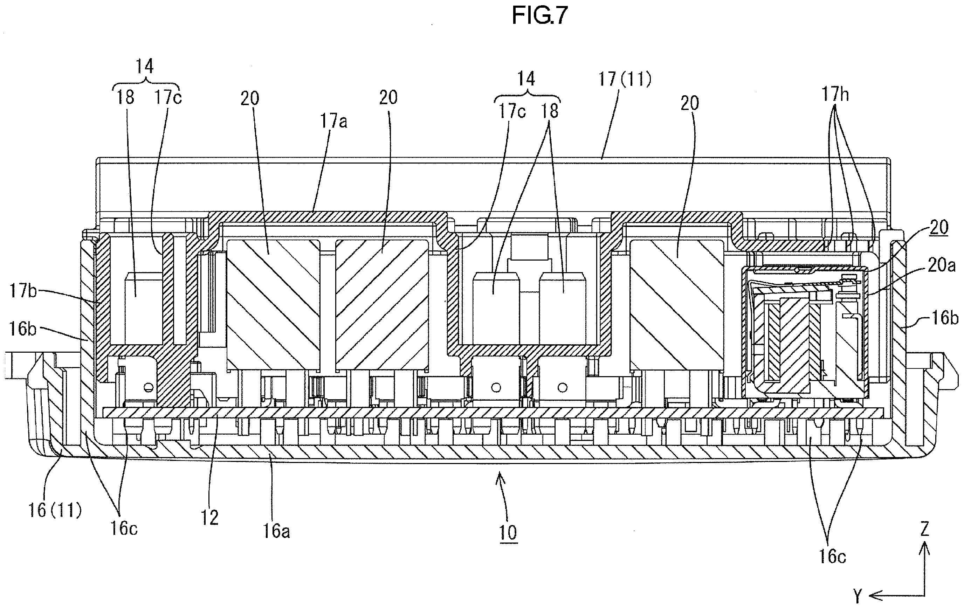

As illustrated in FIG. 2 and FIG. 7, the first circuit board 12 is made of insulating synthetic resin, and extends along a plate surface of the bottom wall 16a of the first casing member 16 with a horizontally elongated plate shape extending over substantially entire area of the bottom wall 16a. A circuit pattern (not illustrated) is formed on one or both of a front surface and a rear surface of the first circuit board 12 by using a printed wiring technology. On a front plate surface of the first circuit board 12, the connector terminals 18 that constitute the connector 14, the fuse connecting terminals 19 that constitute the fuse connectors 15, and relays (the start electrical component) 20 are mounted. The first circuit board 12 has the circuit pattern that is connected to the connector terminals 18, the fuse connecting terminals 19, and the relays 20. The current supplied from the battery flows through the circuit pattern. The first circuit board 12 is a "power circuit board" that relays the power supply from the battery to the vehicle electrical components. The relay 20 mounted on the first circuit board 12 is configured to control whether or not to supply a current from the battery to the various vehicle components.

As illustrated in FIG. 7, the connector terminals 18 protrude from the front plate surface of the first circuit board 12 toward the front side and each have a tab-like shape. The connector terminals 18 are disposed on the first circuit board 12 in bunches such that each bunch is disposed in an area surrounded by each connector hoods 17c. The fuse connecting terminals 19 protrude from the front plate surface of the first circuit board 12 toward the front side and each have a tuning-fork like shape that has a two-pronged front end. The fuse connecting terminals 19 are disposed beside one another on the first circuit board 12 such that the fuse connecting terminals 19 are individually disposed in each fuse attachment space of each fuse attachment 17d. As illustrated in FIG. 1, almost all of the connector terminals 18 and the fuse connecting terminals 19 (except for the connector terminals 18 that are disposed at the upper left corner in FIG. 1) are concentrated at the middle of the first circuit board 12 in the long-side direction.

### (Relay 20)

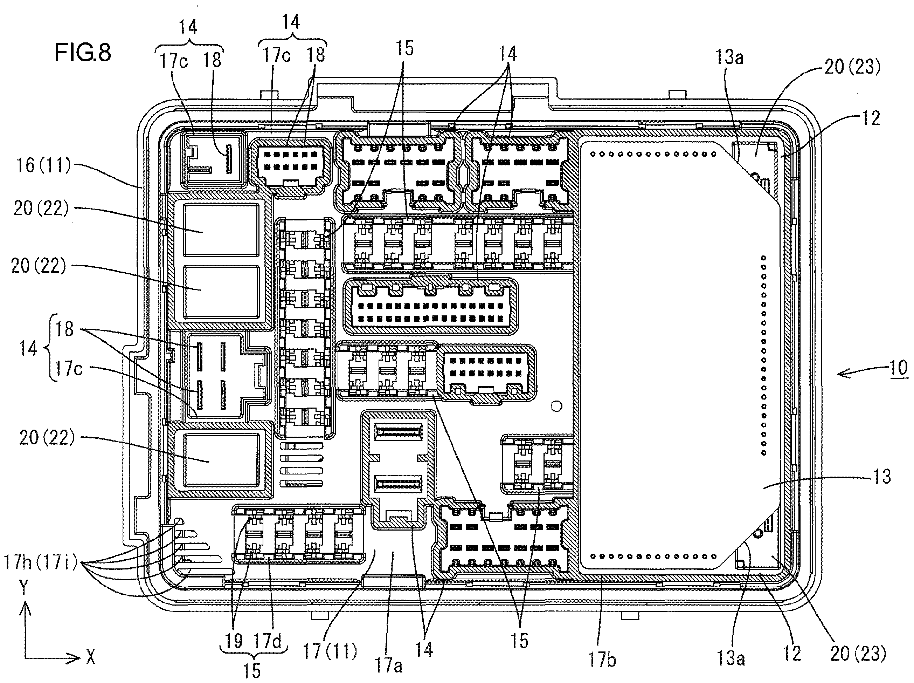

As illustrated in FIG. 8, the relay 20 is an electrical component configured to control whether or not to supply the power from the battery to a vehicle electrical component. Multiple relays 20 are provided for the respective vehicle electrical components to control whether or not to supply a current thereto. When the current starts flowing through the relay 20, the current is supplied to the corresponding vehicle electrical component. When no current flows through the relay 20, the current is not supplied to the corresponding vehicle electrical component. As illustrated in FIG. 8, the relays 20 are disposed on each end portion of the first circuit board 12 in the longitudinal direction. In other words, the relays 20 are dispersedly disposed with the connector terminals 18 and the fuse connecting terminals 19 therebetween. The middle of the first circuit board 12 in the long-side direction is an area for the connector terminals 18 and the fuse connecting terminals 19, and the end portions in the long-side direction are areas for the relays 20.

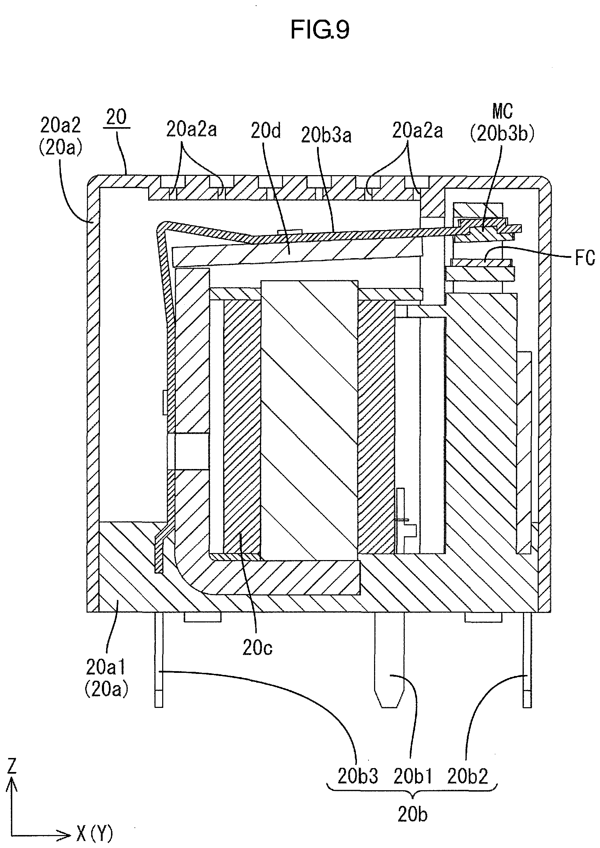

A configuration of the relay 20 will be described in detail. As illustrated in FIG. 9, the relay 20 includes a relay case (an electrical component case) 20a that is made of synthetic resin, a terminal 20b that is made of metal and is attached through a bottom surface of the relay case 20a such that a part thereof protrudes outward from the bottom surface of the relay case 20a, and a coil 20c that is housed in the relay case 20a. The relay case 20a has a block-like shape elongated in the z-axis direction as a whole and has a housing space for the terminal 20b and the coil 20c therein. The relay case 20a includes a base 20a1 that has a bottom surface and a cover 20a2 that has a substantially cylindrical shape with a bottom and covers the base 20a1. The cover 20a2 includes ventilation holes 20a2a (six ventilation holes 20a2a) that communicate with the outside space at its ceiling (a portion facing a movable portion of a movable contact terminal 20b3, which will be described later). The ventilation holes 20a2a are located beside one another at intervals. Through the ventilation holes 20a2a, the moisture generated by the coil 20c that is heated can be released to the outside, and the heat generated on the terminal 20b and the coil 20c therein can be released.

The terminal 20b includes two coil terminals 20b1 each of which is connected to each end portion of a winding wire of the coil 20c in the relay case 20a, a fixed contact terminal 20b2 having a fixed contact FC, and a movable contact terminal 20b3 having a movable contact MC. The movable contact terminal 20b3 has a cantilever-like shape and has a movable portion that can be elastically deformed by a magnetic field of the coil 20c. The movable contact MC at a front end of the movable contact terminal 20b3 is movable toward or away from the fixed contact FC of the fixed contact terminal 20b2. The movable contact terminal 20b3 includes a terminal body 20b3a having the movable portion and a contact member 20b3b having the movable contact MC. The former (the terminal body 20b3a) is made of metal material that provides high durability to a spring included in the movable portion. The latter (the contact member 20b3b) is made of metal material having high conductivity.

A magnetic member 20d that is a magnetic body is attached to the movable portion of the terminal body 20b3a. The magnetic member 20d is made of magnetic material such as iron. The magnetic member 20d is disposed between the movable portion and the coil 20c and is configured to displace the movable portion by electromagnetic induction of the coil 20c.

In the relay 20 in which the current is not supplied through the coil 20c, the fixed contact FC and the movable contact MC are away from each other and not in contact with each other, and thus the current does not flow between the fixed contact terminal 20b2 and the movable contact terminal 20b3. On the other hand, in the relay 20 in which the current is supplied to the coil 20c through the coil terminal 20b1, the magnetic member 20d is attracted toward the coil 20c by the electromagnetic induction of the coil 20c, and the movable contact terminal 20b3 is displaced such that the movable contact MC thereof comes in contact with the fixed contact FC. Thus, the current starts flowing between the fixed contact terminal 20b2 and the movable contact terminal 20b3. In other words, the relay 20 has a contact structure of a form A contact. The terminal 20b1, 20b2, 20b3 each have a portion that protrudes from the bottom surface of the relay case 20a and is soldered to the first circuit board 12 and connected to the circuit pattern at the portion.

### (Second circuit board 13)

The second circuit board 13 is made of insulating synthetic material, and as illustrated in FIG. 8, extends parallel to the plate surface of the first circuit board 12 with a vertically elongated plate shape. The second circuit board 13 is smaller than the first circuit board 12. The second circuit board 13 is housed in the casing 11 such that the long-side direction thereof corresponds to the short-side direction (the Y-axis direction) of the first circuit board 12 and the short-side direction thereof corresponds to the long-side direction (the X-axis direction) of the first circuit board 12. The second circuit board 13 is located in the casing 11 at a position closer to an end in the long-side direction (the X-axis direction) of the casing 11. Specifically, the second circuit board 13 is disposed at a position overlapping with an end of the first circuit board 12 in the long-side direction and the protruded section 17f of the upper wall 17a of the second casing member 17. As illustrated in FIG. 4, the second circuit board 13 is disposed on the front side of the first circuit board 12 in the Z-axis direction (on the side where the relays 20 are mounted) with a predetermined distance therebetween. In this configuration, the housing space for the relays 20 is defined between the first circuit board 12 and the second circuit board 13. In other words, the second circuit board 13 is positioned so as to have the relays 20 between the second circuit board 13 and the first circuit board 12. On the second circuit board 13, various electrical components (not illustrated) such as a resistor, a capacitor, a transistor, and a microcomputer are mounted and a circuit pattern (not illustrated) that is to be connected to the various electrical components are formed.

Further, as illustrated in FIG. 2, one end of each relay terminal 21 is mounted to the second circuit board 13. The other end of each relay terminal 21 is inserted into the first circuit board 12 to connect the circuit patterns of the first and second circuit boards 12, 13 through the relay terminal 21. The relay terminals 21 each include prismatic terminals that are straightly arranged beside one another in the X-axis direction or the Y-axis direction. The relay terminals 21 are each disposed on each short-side end of the second circuit board 13 and on one long-side end that is located on the exterior side of the casing 11 (the right side in FIG. 8). The second circuit board 13 is a "control circuit board" that can control an operation state (whether or not to supply a current) of the relay 20 or other components, which are mounted on the first circuit board 12, by the mounted electrical components.

### (Positions of relays 20)

The relays 20 are arranged in the casing 11 as follows. As illustrated in FIG. 8, the relays 20 are disposed relatively on the exterior side in the casing 11. Specifically, multiple relays 20 are disposed on each end in the long-side direction of the casing 11 and the first circuit board 12 such that the relays 20 constitute two relay groups 22, 23. The first relay group 22 includes the relays 20 that are disposed on the end section (the end section on the left in FIG. 8) that is one of the ends in the long-side direction and does not overlap with the second circuit board 13 in a plan view. The second relay group 23 includes the relays 20 that are disposed on the end section (the end section on the right in FIG. 8) and overlaps with the second circuit board 13 in a plan view. That is, the end sections in the long-side direction of the first circuit board 12 are arrangement areas for the electrical components.

More specifically described, as illustrated in FIG. 8, the relays 20 that are included in the first relay group 22 include a total of four relays 20. Four of the relays 20 are disposed on the end section in the long-side direction of the first circuit board 12 such that two pairs of them, each of which includes two relays 20 adjacent to each other in the Y-axis direction, are disposed on each side in the Y-axis direction with the connector 14 that is disposed at the middle in the short-side direction (the Y-axis direction) therebetween. Four relays 20 that are disposed with the connector 14 therebetween are disposed on the outer ends in the casing 11. Particularly, the relays 20 include the relay 20 that is disposed at one of the corners (a right end in FIG. 7, a lower left corner in FIG. 8) of the casing 11.

Two relays 20 that are included in the second relay group 23 are each disposed on the end portion in the long-side direction of the first circuit board 12 such that the relay terminal 21, which is disposed at the middle in the short-side direction, is located between the relays 20. Two relays 20, which are disposed with the relay terminal 21 therebetween, is disposed on the outer end portion of the casing 11. Particularly, the relays 20 are disposed at two corners (at right and left ends in FIG. 2, at a right upper corner and a right lower corner in FIG. 8) of the casing 11.

### (Heat Dissipation Structure)

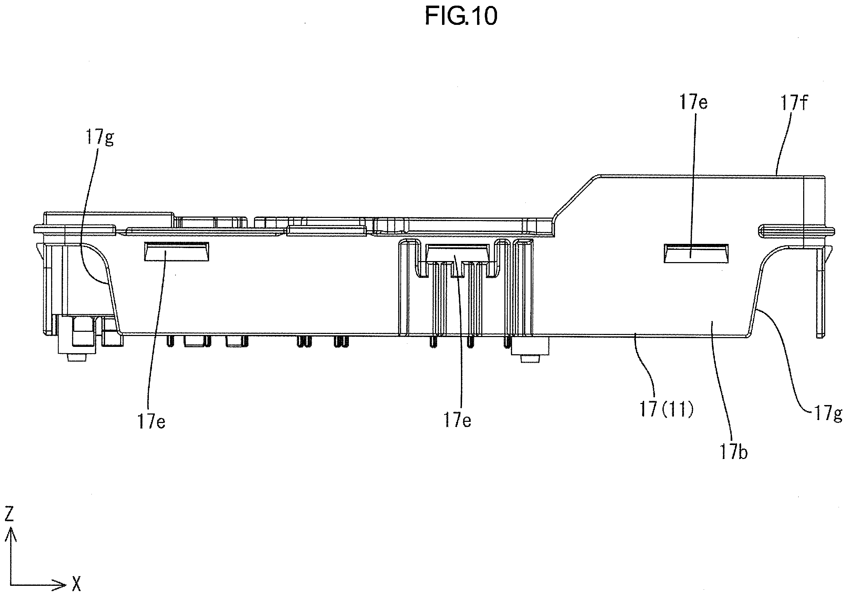

As illustrated in FIG. 6, the inner wall 17b of the second casing member 17 includes cutouts 17g in which the inner wall 17b is cut out. As illustrated in FIG. 6, each one of four corners of the second casing member 17, except for one at left front side in FIG. 6, i.e., three corners, includes the cutout 17g. At three corners, due to the cutouts 17g, only the outer wall 16b of the first casing member 16 separates between the inside and the outside of the casing 11 (see FIG. 5 and FIG. 10). The cutouts 17g are formed at the corners at which the relays 20 are disposed.

As illustrated in FIG. 8, the right upper corner and the right lower corner in FIG. 8 of four corners of the second circuit board 13 are cut-off corners and are each referred to as a retracted part 13a that is away from a part of the relay 20. The retracted parts 13a allow the upper surface of each of the relays 20 that are disposed at the right upper corner and the right lower corner of four corners of the casing 11 faces the upper wall 17a of the second casing member 17 (see FIG. 2).

Further, as illustrated in FIG. 1, the upper wall 17a of the second casing member 17 includes ventilation holes 17h that extend through the upper wall 17a at the right upper corner, the right lower corner, and the left lower corner in FIG. 1. The inside and the outside of the casing 11 are communicated through the ventilation holes 17h. The ventilation holes 17h include slits 17i each of which has an elongated shape and extends in the right-left direction in FIG. 1. The slits 17i are arranged beside one another in the up-down direction in FIG. 1. The ventilation holes 17h are formed in the upper wall 17a at positions near the corners at which the relays 20 are disposed. In other words, the ventilation holes 17h are each formed in the upper wall 17a of the second casing member 17 at a position that faces the upper surface of each relay 20 (see FIG. 2 and FIG. 7).

### (Operation and effect of this embodiment)

Next, the operation and the effect of this embodiment will be described. Initially, problems of the known technology will be described. At the start of the vehicle, a predetermined signal is transmitted from the second circuit board 13 to the first circuit board 12 through the relay terminal 21 to supply a current to the relays 20 that are mounted on the first circuit board 12. Then, the current is supplied to the vehicle electrical components (such as a starter, an engine control unit, a fuel pump, and an ignition), which are controlled by the relays 20, to start the operation of the component such as the engine that is mounted in the vehicle, and thus the vehicle is in an operable state. Since the vehicle in such a state is in operation, the current is supplied or not supplied to the operational electrical components (the connector 14 and the fuse connector 15) by the predetermined signal that is transmitted from the second circuit board 13 to the first circuit board 12 through the relay terminal 21 according to the operation of the user.

When the current is supplied to the vehicle electrical components (such as various lamps, an air conditioner, a power window, a power steering, a power seat, a horn, a wiper, a defroster, and a seat heater), heat is generated on the operational electrical components and the circuit boards 12, 13 due to the supplied current. The amount of the generated heat is likely to be proportional to an accumulated time and the amount of supplied current.

At this time, if the heat of the operational electrical components (the connector 14 and the fuse connector 15) is transmitted to the relay case 20a of the relay 20 that is the start electrical component, a temperature of the relay case 20a increases. Particularly, since the relays 20 included in the second relay group 23 are disposed between the first circuit board 12 and the second circuit board 13, the relay case 20a does not have high heat dissipation. Accordingly, if the heat generated on the operation electrical components during the operation of the vehicle is transmitted to the relay case 20a, the heat is likely to be accumulated on the relay case 20a.

On the other hand, if the engine is shut down in a low temperature and high humidity environment to stop the operation of the vehicle, the decrease in the temperature is easily facilitated, because the terminals 20b each having the fixed contact FC and the movable contact MC of the relay 20 are made of metal material that has higher thermal conductivity than the resin material constituting the relay case 20a and are connected to the circuit pattern of the first circuit board 12 made of metal material, and heat sink effect occurs at a low temperature. In this configuration, the temperature of the relay case 20a becomes relatively high, and the temperature of the terminals 20b having the fixed contact FC and the movable contact MC becomes relatively low. Accordingly, a difference in the temperature between the relay case 20a and the terminals 20b is likely to be large. Particularly, the fixed contact terminal 20b2 having the fixed contact FC is likely to have a lower temperature than the movable contact terminal 20b3 having the movable contact MC, because the movable contact terminal 20b3 includes the magnetic member 20d that is to be in contact with the coil 20c and is likely to have a higher temperature due to the heat transmitted from the coil 20c.

In contrast, in the relay case 20a, the vaporized moisture may exist due to the heat caused by the supply of the current. In such a case, if the large difference in the temperature occurs between the fixed contact terminal 20b2 having the fixed contact FC and the relay case 20a, the condensation is likely to selectively occur on the fixed contact FC of the fixed contact terminal 20b2. The condensation may be frozen in a low temperature environment. If the condensation is frozen, the fixed contact FC and the movable contact MC of the terminals 20b cannot be in contact with each other when the operation of the vehicle is tried to be restarted, which may result in a malfunction of the relay 20A. Thus, the vehicle may not be started, for example, because the engine cannot be started.

In view of the above-described problems, in this embodiment, the inner wall 17b which constitutes the double-layered structure with the outer wall 16b includes the cutouts 17g at positions near the relays 20. In this configuration, at the positions at which the cutouts 17g are formed, only the outer wall 16b separates the inside and the outside of the casing 11. With this configuration, the heat can be easily released from the relay case 20a to the outside of the casing 11 compared to the double-layered structure including the inner wall 17b and the outer wall 16b. As a result, the temperature of the relay case 20a can be decreased. This reduces the difference in temperature between the relay case 20a and the terminal 20b having the fixed contact FC, and thus the condensation and the freezing of the moisture in the relay case 20a hardly occur on the fixed contact FC. Thus, the malfunction of the relay 20 is less likely to occur.

Further, in this embodiment, the casing 11 includes the ventilation holes 17h, through which the inside and the outside of the casing 11 are communicated, at the positions near the relays 20. With this configuration, the heat can be released to the outside of the casing 11 through the ventilation holes 17h included in the casing 11, and thus the temperature of the relay case 20a can be decreased. Accordingly, the condensation and the freezing of the moisture in the relay case 20a hardly occur on the fixed contact FC.

Further, in this embodiment, the relays 20 are disposed on the outer ends of the casing 11. With this configuration, the decrease in the temperature of the relay case 20a in the low temperature environment can be further facilitated, because the relays 20 are disposed on the outer end where the heat can be particularly easily released to the outside. Accordingly, the condensation and the freezing of the moisture in the relay case 20a hardly occur on the fixed contact FC.

Further, in this embodiment, the casing 11 includes the corners defined by the walls, and the relays 20 are disposed at the corners in the casing 11. Since the corners are defined by the walls, the heat in the casing 11 can be easily diffused to the outside through the walls. The temperature of the relay case 20a can be decreased by arranging the relays 20 at the corners. Accordingly, the condensation and the freezing of the moisture in the relay case 20a are further less likely to occur on the fixed contact FC.

Further, in this embodiment, the relays 20 are mounted on the first circuit board 12 housed in the casing 11. The casing 11 further houses the second circuit board 13 at the position away from the plate surface of the first circuit board 12 on the side where the relay 20 is mounted on the first circuit board 12. The second circuit board 13 includes the retracted part 13a that is away from the part of the relay 20. In the above-described configuration, the casing 11 houses the first circuit board 12 and the second circuit board 13, and thus the electrical junction box 10 can have high-density wiring.

Further, since the second circuit board 13 is disposed on the side where the relay 20 is mounted on the plate surface of the first circuit board 12, the heat is likely to be accumulated in the area between the first circuit board 12 and the second circuit board 13 at the position near the relay 20. Thus, to solve this problem, in the above embodiment, the second circuit board 13 includes the retracted parts 13a at the positions corresponding to the relays 20. With this configuration, the heat can be released through the retracted parts 13a, and thus the heat is less likely to be accumulated in the space between the first circuit board 12 and the second circuit board 13. As a result, the temperature of the relay case 20a can be decreased, and thus the condensation and the freezing of the moisture in the relay case 20a is further less likely to occur on the fixed contact FC.

Further, in this embodiment, the electrical component is the relay 20, and the contact of the terminal 20b at least has the fixed contact FC and the movable contact MC, which is movable toward or away from the fixed contact FC. With this configuration, the condensation and the freezing of the moisture in the relay case 20a hardly occur on the fixed contact FC of the terminal 20b. Accordingly, at the restart of the vehicle, the movable contact MC properly comes in contact with the fixed contact FC, and the relay 20 can properly exhibit its switching function.

### <Second embodiment>

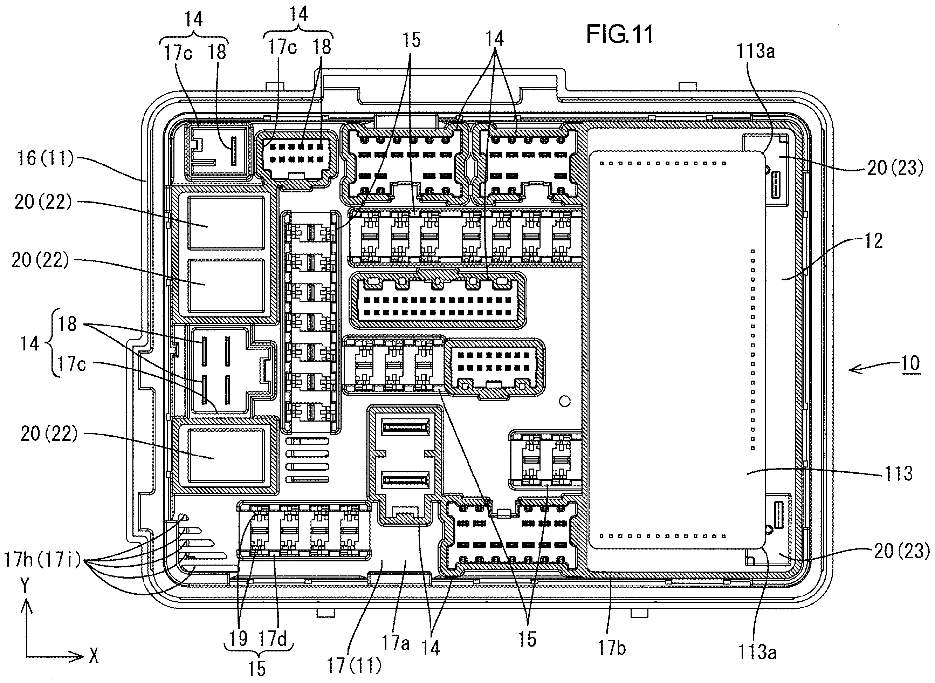

Next, a second embodiment of the present invention will be described with reference to FIG. 11. In this embodiment, a second circuit board 113 is slightly smaller than the second circuit board 13 of the first embodiment. Specifically, a pair of short sides of the second circuit board 113 is slightly away from a pair of long sides of the first circuit board 12 to the inner side. Further, a long side of the second circuit board 113 that is located on the right side in FIG. 11 is slightly away from a right end of the first circuit board 12 to the inner side. With this configuration, the relay 20 that is located at the upper right corner and the relay 20 that is located at the lower right corner in FIG. 11 protrude from an edge of the second circuit board 113. As described above, in the second embodiment, the second circuit board 113 is located more interior than the edge of the first circuit board 12, and thus retracted parts 113a that are away from a part of the relay 20 are formed. In this embodiment, the retracted parts 113a are formed by the upper side edge, the right side edge, and the lower side edge of the second circuit board 113 in FIG. 11.

The parts other than the above have substantially the same configuration as those in the first embodiment, and the parts will be indicated by the same symbols as in the first embodiment and will not be described.

In the above embodiment, since the second circuit board 113 includes the retracted parts 113a at least at the positions corresponding to the relays 20 (the position above the relays 20), the heat can be released through the retracted parts 113a. With this configuration, the heat is less likely to be accumulated in the area between the first circuit board 12 and the second circuit board 113 at the position near the relay 20. As a result, the temperature of the relay case 20a can be decreased, and thus the condensation and the freezing of the moisture in the relay case 20a are further likely to occur on the fixed contact FC.

### <Other embodiments>

The present invention is not limited to the embodiments described in the above description with reference to the drawings. The following embodiments may be included in the technical scope of the present invention.
(1) In the embodiments, the outer wall 16b and the inner wall 17b of the casing 11, which are different walls from the bottom wall 16a and the upper wall 17a, constitute the double-layered structure, but not limited thereto, and both or one of the bottom wall 16a and the upper wall 17a may have the double-layered structure. Alternatively, all of the walls included in the casing 11 may have the double-layered structure. Alternatively, the casing 11 may not have the double-layered structure.
(2) In the embodiments, the inner wall 17b includes the cutouts 17g. However, the outer wall 16b may include cutouts.
(3) The second circuit boards 13, 113 include the retracted parts 13a, 113a, but not limited thereto, and the retracted parts 13a, 113a may be eliminated.
(4) In the embodiments, the ventilation hole 17h is formed in the upper wall 17a of the second casing member 17, but not limited thereto, and the ventilation hole 17h may be formed in the bottom wall 16a of the first casing member 16. Further, the ventilation hole 17h may be eliminated.
(5) In the embodiments, the relay 20 is disposed at the corner of the casing 11, but not limited thereto, and the relay 20 may be disposed near the center of the casing 11 and may be disposed at any position of the casing 11 as necessary.
(6) In the embodiments, the cutout 17g is formed at the corner of the casing 11, but not limited thereto, and the cutout 17g may be formed at any position of the casing 11 as necessary.
(7) In the embodiments, the ventilation holes 17 are the slits 17i each having the elongated shape and formed beside one another, but not limited thereto, and the ventilation hole 17h may have any shape as necessary.
(8) The electrical junction box 10 described in the above-described embodiments may be mounted in the vehicle such that one of the X-axis direction, the Y-axis direction, and the Z-axis direction in the drawings corresponds to the vertical direction or the horizontal direction. In addition, the electrical junction box 10 may be mounted in the vehicle such that one of the X-axis direction, the Y-axis direction, and the Z-axis direction in the drawings tilts relative to the vertical direction or the horizontal direction.
(9) In the above-described embodiments, the relay 20 is exemplified as the electrical component. However, according to the present invention, other than the relay 20, a contact type electrical component having a terminal with a contact may be used as the electrical component. Further, the contact structure of the relay 20 used as the electrical component may be a form B contact structure or a form C contact structure other than the form A contact structure.
(10) In the above-described embodiments, the relay has a configuration in which the fixed contact terminal 20b2 having no magnetic member is likely to have a low temperature compared to the movable contact terminal 20b3 having the magnetic member to be in contact with the coil. However, the present invention may be applied to a relay in which the movable contact terminal 20b3 and the fixed contact terminal 20b2 are likely to have substantially the same temperature due to the influence of the outside environment, for example. In such a case, the condensation and the freezing hardly occur at both of the movable contact MC and the fixed contact FC. Further, the present invention may be applied to the relay 20 in which the movable contact terminal 20b3 is likely to have a lower temperature than the fixed contact terminal 20b2 due to the influence of the outside environment, for example. In such a case, the condensation and the freezing hardly occur at the movable contact MC.

### EXPLANATION OF SYMBOLS

- 10:: electrical junction box
- 11:: casing
- 12:: first circuit board
- 13, 113:: second circuit board
- 13a, 113a:: retracted part
- 16b:: outer wall
- 17b:: inner wall
- 17g:: cutout
- 17h:: ventilation hole
- 20:: relay (electrical component)
- 20a:: relay case (electrical component case)
- 20b:: terminal
- FC:: fixed contact
- MC:: movable contact

## Claims

1. An electrical junction box (10) comprising:
a casing (11); and
an electrical component (20) housed in the casing (11), the electrical component (20) including an electrical component case (20a) and a terminal (20b), the terminal (20b) being attached through the electrical component case (20a) and including a contact (FC, MC) located inside the electrical component case (20a), wherein
the electrical component (20) is located at an outer end in the casing (11),
wherein furthermore means are provided for decreasing a temperature of the electrical component case (20a) under operation of the electrical component (20) housed therein, said means are provided by
the casing (11) including an inner wall (17b) and an outer wall (16b) located more exterior than the inner wall (17b) in a thickness direction of the inner wall, and
one of the inner wall (17b) and the outer wall (16b) has a cutout (17g) at a position near the electrical component (20).

2. The electrical junction box (10) according to claim 1, wherein
the casing (11) includes a corner defined by a plurality of walls, and the electrical component (20) is located at the corner in the casing (11).

3. The electrical junction box (10) according to claim 1 or 2, wherein the casing (11) includes a ventilation hole (17h) at a position near the electrical component (20), and an inside and an outside of the casing (11) are communicated through the ventilation hole (17h).

4. The electrical junction box (10) according to any one of claims 1 to 3, wherein the electrical component (20) is mounted on a first circuit board (12) housed in the casing (11),
the casing (11) further houses a second circuit board (13; 113) at a position away from a plate surface of the first circuit board (12), on a side where the electrical component (20) is mounted on the first circuit board, and
the second circuit board (13; 113) includes a retracted part (13a; 113a) at least at a position corresponding to the electrical component (20), the retracted part being away from a part of the electrical component (20).

5. The electrical junction box (10) according to any one of claims 1 to 4, wherein
the electrical component (20) is a relay, and
the contact (FC, MC) of the terminal (20b) at least includes a fixed contact (FC) and a movable contact (MC) movable toward or away from the fixed contact (FC).

## Patentansprüche

1. Elektrische Anschlussdose (10), aufweisend:
ein Gehäuse (11); und
ein elektrisches Bauteil (20), welches in dem Gehäuse (11) aufgenommen ist, wobei das elektrische Bauteil (20) ein elektrisches Bauteilgehäuse (20a) und einen Anschluss (20b) enthält, wobei der Anschluss (20b) durch das elektrische Bauteilgehäuse (20a) angebracht ist und einen Kontakt (FC, MC) enthält, der innerhalb des elektrischen Bauteilgehäuses (20a) liegt, wobei
das elektrische Bauteil (20) in dem Gehäuse (11) an einem äußeren Ende liegt,
wobei weiterhin Mittel vorgesehen sind, um eine Temperatur des elektrischen Bauteilgehäuses (20a) während des Betriebs des hierin aufgenommenen elektrischen Bauteils (20) zu verringern, wobei die Mittel geschaffen sind durch
das Gehäuse (11), welches eine Innenwand (17b) und eine Außenwand (16b) enthält, die in Dickenrichtung der Innenwand mehr außerhalb als die Innenwand (17b) liegt, und
einen Ausschnitt (17g), den entweder die Innenwand (17b) oder die Außenwand (16b) an einer Stelle nahe des elektrischen Bauteils (20) hat.

2. Elektrische Anschlussdose (10) nach Anspruch 1, wobei
das Gehäuse (11) eine durch eine Mehrzahl von Wänden definierte Ecke hat, wobei das elektrische Bauteil (25) an der Ecke in dem Gehäuse (11) liegt.

3. Elektrische Anschlussdose (10) nach Anspruch 1 oder 2, wobei
das Gehäuse (11) eine Belüftungsöffnung (17h) an einer Position nahe des elektrischen Bauteils (20) hat, wobei eine Innenseite und eine Außenseite des Gehäuses (11) über die Belüftungsöffnung (17h) miteinander in Verbindung stehen.

4. Elektrische Anschlussdose (10) nach einem der Ansprüche 1 bis 3, wobei
das elektische Bauteil (20) auf einer ersten Platine (12) angeordnet ist, die in dem Gehäuse (11) aufgenommen ist, wobei das Gehäuse (11) weiterhin eine zweite Platine (13; 113) an einer Position entfernt von einer Plattenfläche der ersten Platine (12) an einer Seite, wo das elektrische Bauteil (20) an der ersten Platine angeordnet ist, aufnimmt, und
die zweite Platine (13; 113) einen zurückspringenden Teil (13a; 113a) an zumindest einer Position entsprechend dem elektrischen Bauteil (20) enthält, wobei der zurückspringende Teil entfernt von einem Teil des elektrischen Bauteils (20) ist.

5. Elektrische Anschlussdose (10) nach einem der Ansprüche 1 bis 4, wobei
das elektrische Bauteil (20) ein Relais ist, und
der Kontakt (FC, MC) des Anschlusses (20b) wenigsten einen festen Kontakt (FC) und einen beweglichen Kontakt (MC) enthält, der auf den festen Kontakt (FC) zu oder von diesem weg beweglich ist.

## Revendications

1. Boîte de jonction électrique (10) comprenant :
une enveloppe (11) ; et
un composant électrique (20) contenu dans l'enveloppe (11), le composant électrique (20) comportant un boîtier de composant électrique (20a) et une borne (20b), la borne (20b) étant fixée à travers le boîtier de composant électrique (20a) et comportant un contact (FC, MC) situé à l'intérieur du boîtier de composant électrique (20a), dans laquelle
le composant électrique (20) est situé au niveau d'une extrémité externe à l'intérieur de l'enveloppe (11),
dans laquelle des moyens sont en outre agencés de manière à réduire une température du boîtier de composant électrique (20a) pendant le fonctionnement du composant électrique (20) contenu dans celui-ci, lesdits moyens sont formés par :
l'enveloppe (11) comportant une paroi interne (17b) et une paroi externe (16b) située plus à l'extérieur que la paroi interne (17b) dans le sens de l'épaisseur de la paroi interne, et
l'une de la paroi interne (17b) et de la paroi externe (16b) comporte une entaille (17g) à une position proche du composant électrique (20).

2. Boîte de jonction électrique (10) selon la revendication 1, dans laquelle l'enveloppe (11) comporte un angle défini par une pluralité de parois, et le composant électrique (20) est situé au niveau de l'angle dans l'enveloppe (11).

3. Boîte de jonction électrique (10) selon la revendication 1 ou 2, dans laquelle l'enveloppe (11) comporte un orifice de ventilation (17h) à une position proche du composant électrique (20), et une partie interne et une partie externe de l'enveloppe (11) sont en communication à travers l'orifice de ventilation (17h).

4. Boîte de jonction électrique (10) selon l'une quelconque des revendications 1 à 3, dans laquelle le composant électrique (20) est monté sur une première carte de circuit (12) contenue dans l'enveloppe (11),
l'enveloppe (11) contient en outre une seconde carte de circuit (13 ; 113) à une position à l'écart d'une surface plane de la première carte de circuit (12), sur une face sur laquelle le composant électrique (20) est monté sur la première carte de circuit, et
la seconde carte de circuit (13 ; 113) comporte une partie rétractée (13a ; 113a) au moins à une position correspondant au composant électrique (20), la partie rétractée étant à l'écart d'une partie du composant électrique (20).

5. Boîte de jonction électrique (10) selon l'une quelconque des revendications 1 à 4, dans laquelle
le composant électrique (20) est un relais, et
le contact (FC, MC) de la borne (20b) comporte au moins un contact fixe (FC) et un contact mobile (MC) pouvant être déplacé vers ou à l'opposé du contact fixe (FC).
